# EUROPÄISCHE PATENTANMELDUNG

(11) **EP 3 622 808 A1**
(43) Veröffentlichungstag der Anmeldung: **18.03.2020**
(21) Anmeldenummer: 19197632.3
(22) Anmeldetag: 16.09.2019
(51) Int. Cl.: A01G 9/14

(54) **SPROSSENPROFILEINHEIT FÜR EIN FOLIENDACH AN EINEM GEWÄCHSHAUS**

(30) Priorität: 14.09.2018 DE 202018105272 U
(71) Anmelder: Handelsvertretungen W. Block Industrie- und Garten GmbH & Co. KG, 48282 Emsdetten (DE)
(72) Erfinder: Wensing, Benedikt, 48157 Münster (DE); Block, Wolfgang, 48268 Greven (DE); Welp, Matthias, 48477 Hörstel (DE)
(74) Vertreter: Tarvenkorn, Oliver

(57) **Zusammenfassung**

Sprossenprofileinheit (100) für ein Foliendach an einem Gewächshaus, wenigstens umfassend ein Sprossenbasisprofil (110) und ein Folienspannprofil (120), wobei
- das Sprossenbasisprofil (110) im Querschnitt einen Basisabschnitt (111) umfasst, der beidseitig von Seitenschenkeln (112) eingefasst ist, und dazwischen wenigstens ein nach oben offener Aufnahmeraum (114) ausgebildet ist
- wenigstens ein Verbindungselement vorgesehen ist, durch welches das Sprossenbasisprofil (110) und das Folienspannprofil (120) gegeneinander verspannbar sind.
- wobei das Folienspannprofil (120) die beiden Seitenschenkel (112) des Sprossenbasisprofils (110) und den wenigstens einen dazwischen liegenden Aufnahmeraum (114) überdeckt.

Das Folienspannprofil (120) weist wenigstens eine im Querschnitt bogenförmige Kederaufnahme (121) auf, die bei der montierten Sprossenprofileinheit (100) bis unterhalb der Außenkanten (113) der Seitenschenkel (112) in den Aufnahmeraum (114) abgesenkt angeordnet ist. Das Sprossenbasisprofil (110) und das Folienspannprofil (120) sind durch einen an wenigstens eines der Profile angeformten Stützsteg (124) aneinander abgestützt.

## Beschreibung

Die Erfindung bezieht sich auf eine Sprossenprofileinheit für ein Foliendach an einem Gewächshaus.

Gewächshäuser benötigen transparente Dachkonstruktionen, um den für das Pflanzenwachstum notwendigen Lichteinfall zu ermöglichen. Dächer und Wände aus Echtglas besitzen verschiedene Nachteile. Hier ist zum einen das hohe Eigengewicht zu nennen, das eine entsprechend stabile Unterkonstruktion erfordert. Unwetterereignisse wie Sturm und Hagel können zu großflächigen Beschädigungen des Glasdaches führen, deren Beseitigung nicht nur sehr teuer ist, sondern auch zu Personenschäden führen und Pflanzenkulturen beschädigen kann.

Als Alternative sind Gewächshäuser mit Foliendächern bekannt, beispielsweise aus der DE 44 456 94A1. Die Folien sind über randseitig eingelegte Keder in Profilen befestigt, die auf dem Tragwerk aus Stahl aufgebracht sind. Hierbei können auch zwei Folien parallel und mit Abstand zueinander vorgesehen sein, um dazwischen einen wärmeisolierenden Hohlraum auszubilden. Der Nachteil des bekannten Foliendaches liegt darin, dass es schwierig ist, eine ausreichende Spannung auf die Folienbahn aufzubringen und eine glatte, glasartige Oberfläche ohne Falten und ohne Bewegung bei Wind zu erreichen. Außerdem ist bei dem bekannten Gewächshaus vorgesehen, die Folienbahn in Längsrichtung des Daches zu verlegen, sodass es erforderlich ist, eine sehr breite Folienbahn vorzusehen, die eine komplette Dachfläche vom First bis zur Traufe abdeckt.

Die Aufgabe der vorliegenden Erfindung liegt somit darin, eine einfache Montage eines Foliendachs mit hohen Spannkräften zu ermöglichen.

Diese Aufgabe wird durch eine Spannprofileinheit mit den Merkmalen des Anspruchs 1 gelöst.

Die erfindungsgemäße Spannprofileinheit ermöglicht sehr hohe Spannkräfte in einer daran angebundenen Folienbahn, die allein dadurch aufgebracht werden, dass deren beiden Einzelprofile miteinander verschraubt werden. Ein Sprossenbasisprofil wird mit dem Tragwerk verbunden, insbesondere mit den Sparren. Die Verlegerichtung ist bevorzugt vom First zur Traufe, so dass sich eine geneigte Anordnung ergibt, die einen Wasserablauf ermöglicht. Für die vertikalen Seitenwände bietet sich eine vertikale Anbringung der Sprossenprofileinheit an. Jedoch ist sowohl am geneigten Dach wie an den Seitenwänden auch eine horizontale Anbringung möglich.

In Bezug auf die Anwendung am Gewächshaus ist die verspannte Bahn bevorzugt aus einer lichtdurchlässigen, insbesondere transparenten Kunststofffolie aus ETFE gebildet. Um hieraus eine dauerhaft witterungsbeständige Dacheindeckung zu bilden, sind hohe Schichtstärken von 1 bis 2 mm erforderlich, woraus wiederum hohe Spannkräfte resultieren, welche durch die erfindungsgemäße Spannprofileinheit aufgebracht werden können. Im Sinne der Erfindung sind aber auch andere ebene Flächengebilde mit einlegbarem oder angebrachtem Kederprofil unter dem Begriff "Folie" eingeschlossen, für die nur eine geringere Vorspannung notwendig ist und mit denen eine Wand oder Dachhaut gebildet werden kann.

Um die hohen Spannkräfte, die durch die erfindungsgemäße Sprossenprofileinheit erreichbar sind, aufzunehmen, müssen je zwei parallele Sprossenprofileinheiten gegeneinander abgestützt werden, so dass sich insgesamt ein rechteckiger Spannrahmen ergibt, in welchem die Folienbahn gehalten und gespannt ist. Die Abstützung zwischen den Sprossenprofileinheiten kann entweder über ein ausreichend stabiles Tragwerk aus Stahl oder über gesonderte Stützprofile erreicht werden, die zwischen benachbarten Sprossenprofileinheit angeordnet werden.

Vorzugsweise weist die Sprossenprofileinheit nach der Erfindung zwei Kederaufnahmen auf. Damit können zwei Folienbahn an einer gemeinsamen Sprossenprofileinheit befestigt werden, was nicht nur eine schlanke Ausbildung ermöglicht, sondern insbesondere dazu führt, dass sich die den beiden vorgespannten Folienbahnen ausgehenden, gegensätzlich gerichteten Zugspannungen gegenseitig kompensieren. Damit wird die Sprossenprofileinheit theoretisch gar nicht auf Biegung beansprucht und in der Praxis nur insoweit belastet wie lokale, aber geringe Spannungsdifferenzen zwischen den benachbarten Folienbahnen bestehen.

Keineswegs trivial in dem Zusammenhang ist, dass die erfindungsgemäße Sprossenprofileinheit in der bevorzugten Duo-Variante zwangsläufig dazu führt, dass bei der Montage beide Folienbahnen gleichzeitig gespannt werden, so dass es auch während der Montage keine Phase gibt, in der die Sprossenprofileinheit einseitig wirkenden Zugspannungen ausgesetzt ist. Somit muss lediglich für die ganz am Dachrand platzierten Sprossenprofileinheiten, die nur eine Folienbahn halten, eine besondere Befestigung an einem entsprechend biegesteifen Tragwerk vorgesehen werden.

Die Montage mit gleichzeitiger Herbeiführung der Vorspannung erfolgt derart, dass das Folienspannprofil bereits die mit Kederprofilen eingefassten Ränder von einer Folienbahn oder zwei Folienbahnen hält und von oben in das Sprossenbasisprofil eingeführt wird. Je mehr das Folienspannprofil durch die Verschraubung sich an das Sprossenbasisprofil annähert, desto mehr werden die Folienbahnen über die abgerundeten Außenkanten des Sprossenbasisprofils in den Aufnahmeraum der Sprossenprofileinheit heruntergezogen, wodurch die Spannung in der Folienbahn erzeugt wird.

Diese Grundkonstruktion der erfindungsgemäßen Sprossenprofileinheit erlaubt es, durch Anpassung der Profilhöhen die Spannkräfte zu variieren und entsprechend eine Anpassung an mehr oder weniger breite Folienbahnen vornehmen zu können, um auch bei größeren Breiten eine ausreichend hohe Dehnung und Vorspannung herbeiführen zu können.

Bevorzugt wird die Verbindung einfach über in regelmäßigen Abständen entlang der Sprossenprofileinheit platzierte Schrauben hergestellt, die entweder von unten, durch das Sprossenbasisprofil hindurch in einen Schraubkanal im Folienspannprofil eingreifen, oder umgekehrt sich durch das Folienspannprofil in einen Schraubkanal im Sprossenbasisprofil erstrecken.

Weitere vorteilhafte Ausgestaltungen der Erfindung werden mit Bezug auf die Zeichnungen näher erläutert. Die Figuren zeigen jeweils in einer Schnittdarstellung:
- Fig. 1A: eine Sprossenprofileinheit nach einer ersten Ausführungsform, vor der Montage;
- Fig. 1B: eine Sprossenprofileinheit nach der ersten Ausführungsform, nach der Montage;
- Fig. 2: eine montierte Sprossenprofileinheit nach einer zweiten Ausführungsform;
- Fig. 3A: eine Sprossenprofileinheit nach einer dritten Ausführungsform, vor der Montage; und
- Fig. 3B: eine Sprossenprofileinheit nach der dritten Ausführungsform, nach der Montage.

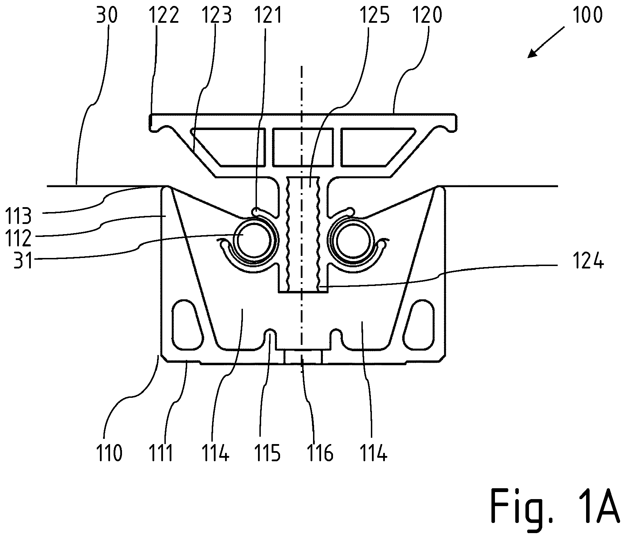

In Figur 1A ist eine Sprossenprofileinheit 100 nach einer ersten Ausführungsform im Schnitt dargestellt, und zwar zu Beginn einer Montage, bevor ein Sprossenbasisprofil 110 und ein Folienspannprofil 120 miteinander verbunden werden.

Das Sprossenbasisprofil 110 ist wannenförmig ausgebildet und schließt einen nach oben offenen Aufnahmeraum 114 ein. Es besitzt einen Basisabschnitt 111 und zwei Seitenwände 112, die nach oben hin an einer gerundeten Außenkante 113 auslaufen. Die Innenfläche der Seitenwand 112 ist geneigt. Am Basisabschnitt 11 sind zentrale Befestigungsöffnungen 116 vorgesehen. Beidseits davon erstrecken sich Führungsstege 115 in den Aufnahmeraum 114.

Das Folienspannprofil 120 bildet ein Dach, das den Aufnahmeraum 114 des Sprossenbasisprofils 110 abdeckt und die komplette Breite des Sprossenbasisprofils 110 überdeckt. Der obere Bereich des Folienspannprofils 120 ist als doppelwandiges Hohlkammerprofil mit vertikalen Stützstegen ausgebildet und besitzt somit eine hohe Steifigkeit. Damit kann über die Länge der Sprossenprofileinheit 100 gesehen die Anzahl der Verschraubungspunkte zwischen Sprossenbasisprofil 110 und Folienspannprofil 120 reduziert werden, ohne dass sich das Folienspannprofil 120 zwischen benachbarten Verschraubungspunkten zu weit aufwölbt und vom Sprossenbasisprofil 110 entfernt.

Die Außenkanten 122 des Folienspannprofils 120 sind an der Unterseite leicht konkav ausgebildet, um sich an die Form der Außenkanten 113 des Sprossenbasisprofils 110 anzupassen. Wesentlich an dem Folienspannprofil 120 sind zwei Kederaufnahmen 121, welche bei dem dargestellten Ausführungsbeispiel beidseits an die Außenseiten eines zentralen Stützstegs 124 angeformt sind. Der Stützsteg 124 ist innen hohl, so dass sich ein Schraubkanal 125 ausbildet.

In den Kederaufnahmen 121 ist jeweils der Rand einer Folienbahn 30 mit einem eingelegten oder angeschweißten Kederprofil 31 eingezogen.

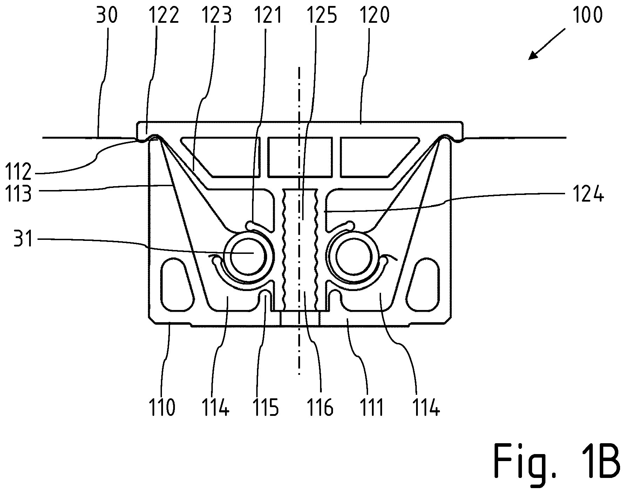

Figur 1B zeigt die fertig montierte Sprossenprofileinheit 100. Das Folienspannprofil 120 liegt nun mit dem unteren Rand seines Stützstegs 124 am Boden des Sprossenbasisprofils 110 an. Dabei ist der Stützsteg 124 zwischen den Führungsstegen 115 zentriert. Die Verbindung erfolgt durch nicht dargestellte Schraubelemente, welche durch die Befestigungsöffnungen 116 hindurch in den Schraubkanal 125 eingreifen.

Für die Funktion wesentlich ist, dass mit der Absenkung des Folienspannprofils 120 gegenüber dem Sprossenbasisprofil 110 zugleich die Kederaufnahmen 121 tiefer in den Aufnahmeraum 114 geschoben werden. Dadurch vergrößert sich der Abstand zwischen dem Kederprofil 31 und der Außenkante 113 der Außenwand 112 des Sprossenbasisprofils 110. Infolge dessen wird eine Dehnung in der elastischen Folienbahn 30 bewirkt. Wenn Sprossenbasisprofil 110 und Folienspannprofil 120 aneinander anliegen, schließt sich auch der durch das Folienspannprofil 120 gebildete Deckel über dem Aufnahmeraum 114 und die Außenkanten 122 des Folienspannprofils 120 überdecken zumindest die Außenkanten 113 der Außenwände 112. Dadurch wird bereits ein Spritzwasserschutz gebildet.

Vorzugsweise ist die Abstimmung der geometrischen Verhältnisse an den beiden Profilen 110, 120 so gewählt, dass die Außenkanten 122 des Folienspannprofils 120 auf die Außenkanten 113 der Außenwände 112 aufgedrückt werden und die Folienbahn 30 dazwischen eingeklemmt wird. Hierdurch wird die gesamte Kontaktlinie von Folienspannprofil 120, Sprossenbasisprofil 110 und Folienbahn 31 abgedichtet. Die in der Regel mit Neigung an einem Gewächshausdach angeordnete Sprossenprofileinheit 100 ist somit gegenüber Regenwasser abgedichtet. Dieses läuft an der Oberseite des Folienspannprofils 120 und an der Folienbahn 30 entlang nach unten ab, so dass in dem Übergangsbereich an der Außenkante 113 niemals stehendes oder drückendes Wasser vorliegt. Eine geringe Profilierung zwischen den Außenkanten 113, 122 ist daher bereits ausreichend, um zu verhindern, dass Wasser in den Aufnahmeraum 114 gelangt. Sollte dennoch an einer Fehlstelle Wasser in den Aufnahmeraum 114 gelangen, gelangt es in den Bodenbereich des Sprossenbasisprofils 110 und fließt dort innenliegend direkt ab. Die Führungsstege 115 verhindern dabei, dass Wasser durch die Befestigungsbohrungen 116 in den Innenraum des Gewächshauses fließen kann.

Figur 1B verdeutlicht zudem, warum die Innenseite der Außenwand 112 abgeschrägt ist und auch die Unterseite des Folienspannprofils 120 beidseits jeweils mit einer schrägen Flanke 123 versehen ist: Zum einen sollen sich die Profile 110, 120 nicht oder nur genau an den Außenkanten 113, 122 und/oder am Stützsteg 124 berühren. Dabei muss sichergestellt sein, dass das Folienspannprofil 120 mit seinen Kederaufnahmen 121 ohne Behinderung in den Aufnahmeraum 114 abgesenkt werden kann, bis der Stützsteg 124 unten anliegt. Zum anderen soll auch die Folienbahn 31 definiert gedehnt werden, ohne dass es andere Berührungslinien zwischen der Folienbahn und den Profilen 110, 120 gibt als die Oberkante der Seitenschenkel. Mit der Abschrägung der Flanke 123 zieht sich diese von der gestrafften Folienbahn 31 zurück.

Die als Duo-Profil ausgebildete Sprossenprofileinheit 100 kann auch randseitig an einem Gewächshausdach, und dann mit nur einer einseitig angeschlossenen Folienbahn 30 eingesetzt werden. Die ungenutzte Seite bleibt einfach frei.

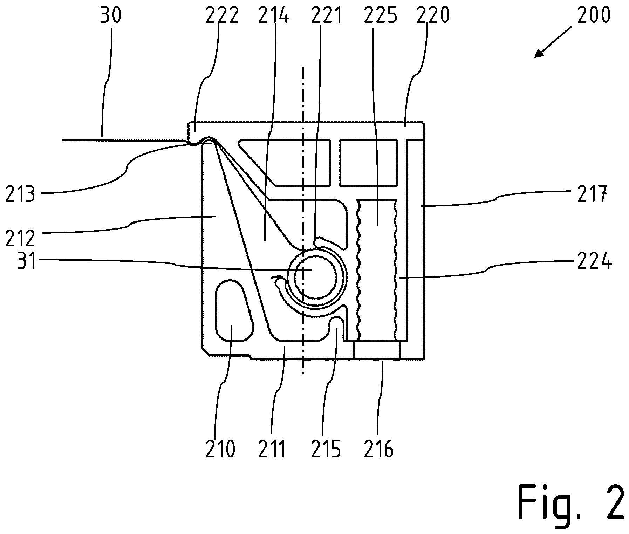

Sofern ein schmaleres Profil für den Randbereich des Dachs gewünscht ist, kann eine in Figur 2 gezeigte Sprossenprofileinheit 200 als Mono-Profil eingesetzt werden. Diese ist im mittleren und linken Profilbereich prinzipiell gleich aufgebaut wie die zuvor beschriebene, als Duo-Profil ausgebildete Sprossenprofileinheit 100. Ein Sprossenbasisprofil 210 besitzt einen verkleinerten Aufnahmeraum 214 ein, der zwischen einem Basisabschnitt 211 und zwei Seitenwänden 212, 217 ausgebildet ist, wobei nur die linke Seitenwand 212 nach oben hin an einer gerundeten Außenkante 213 ausläuft. An einem Basisabschnitt 211 sind zentrale Befestigungsöffnungen 216 vorgesehen. Zu einer Seite ist ein Führungssteg 215 angeordnet, zur anderen Seite wird dessen zentrierende Funktion über eine Seitenwand 217 mit übernommen.

Ein Folienspannprofil 220 überdeckt den Aufnahmeraum 214. Die Profilierung der Außenkanten 222, 213 ist wie bei der Sprossenprofileinheit 100 auch ausgebildet. Das Folienspannprofil 220 besitzt auch einen Stützsteg 124 mit einem Schraubkanal 125. Allerdings besitzt das Folienspannprofil 220 nur eine Kederaufnahme 221. In der Kederaufnahme 121 ist der Rand einer Folienbahn 30 mit einem eingelegten oder angeschweißten Kederprofil 31 eingezogen.

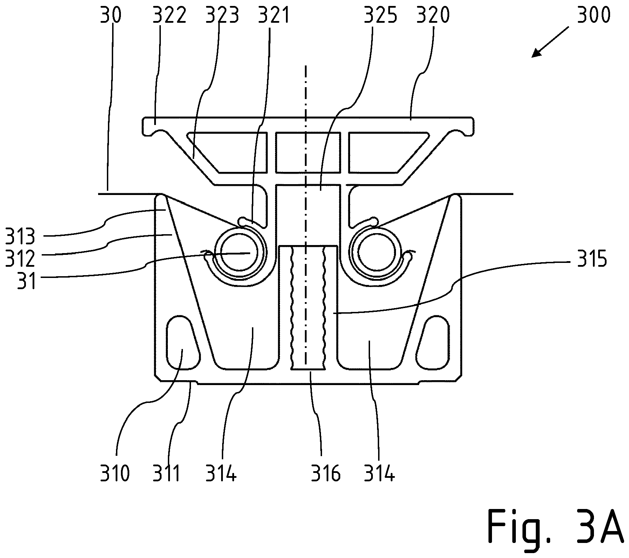

Figur 3A zeigt eine weitere Ausführungsform einer Sprossenprofileinheit 300 vor der Montage. Diese besitzt wiederum zwei Kederaufnahmen 321 an einem Folienspannprofil 320. Das Folienspannprofil 320 ist im Bereich des Deckelabschnitts mit einer Außenkante 322 und einer schrägen Flanke 323 genauso profiliert wie die entsprechenden Bereiche der anderen Ausführungsformen auch. Auch ein zugehöriges Sprossenbasisprofil 310 ist ähnlich aufgebaut. Der wesentliche Unterschied der Sprossenprofileinheit 300 gegenüber den anderen Ausführungsformen von Sprossenprofileinheiten 100, 200 besteht darin, dass hierbei ein Stützsteg 315 an das Sprossenbasisprofil 310 angeformt ist, der den Innenraum des Sprossenbasisprofils 310 in zwei Aufnahmekammern 314 teilt. Am Folienspannprofil 320 ist zwischen den Kederaufnahmen 321 eine Aufnahme 325 ausgebildet, in die der Stützsteg 315 eingeschoben werden kann.

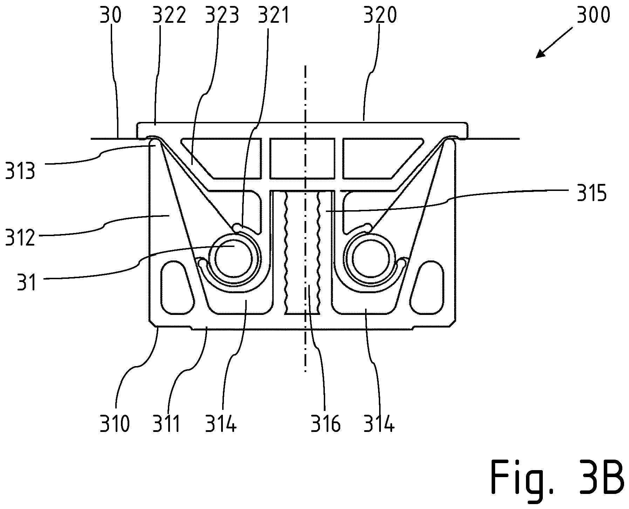

Figur 3B zeigt die fertig montierte Sprossenprofileinheit 300, wobei die Aufnahme, Führung und ggf. Klemmung der Folienbahn 30 in gleicher Weise erfolgt wie bei den anderen Ausführungsformen auch.

Die umgekehrte Anordnung des Stützstegs 315 ermöglicht eine Verschraubung des Folienspannprofils 320 von der Dachoberseite her, die meist leichter durchzuführen ist also von der Unterseite. Dazu wird der Deckelbereich des Folienspannprofils punktuell durchbohrt. Von außen eingeführte Schrauben können in den Schraubkanal 316 eingreifen, der nach unten hin geschlossen ist. In den Schraubkanal 316 möglicherweise eindringendes Wasser fließt im Profil ab, kann aber nicht unter die Dachhaut gelangen.

Außerdem muss die Unterseite des Sprossenbasisprofils 310 nicht mehr zur Verbindung mit dem Folienspannprofil 320 zugänglich sein. Das Sprossenbasisprofil 310 kann daher mit seinem Basisabschnitt 311 vollflächig auf die Unterkonstruktion aufgesetzt werden.

## Patentansprüche

1. Sprossenprofileinheit (100; 200; 300) für ein Foliendach an einem Gewächshaus, wenigstens umfassend ein Sprossenbasisprofil (110; 210; 310) und ein Folienspannprofil (120; 220; 320), wobei
- das Sprossenbasisprofil (110; 210; 310) im Querschnitt einen Basisabschnitt (111; 211; 311) umfasst, der beidseitig von Seitenschenkeln (112; 212, 217; 312) eingefasst ist, und dazwischen wenigstens ein nach oben offener Aufnahmeraum (114; 214; 314) ausgebildet ist
- wenigstens ein Verbindungselement vorgesehen ist, durch welches das Sprossenbasisprofil (110; 210; 310) und das Folienspannprofil (120; 220; 320) gegeneinander verspannbar sind.
- wobei das Folienspannprofil (120; 220; 320) die beiden Seitenschenkel (112; 212, 217; 312) des Sprossenbasisprofils (110; 210; 310) und den wenigstens einen dazwischen liegenden Aufnahmeraum (114; 214; 314) überdeckt; und
**dadurch gekennzeichnet, dass**
- das Folienspannprofil (120; 220; 320) wenigstens eine im Querschnitt bogenförmige Kederaufnahme (121; 221; 321) aufweist, die bei der montierten Sprossenprofileinheit (100; 200; 300) bis unterhalb der Außenkanten (113, 213, 313) der Seitenschenkel (112; 212; 312) in den Aufnahmeraum (114; 214; 314) abgesenkt angeordnet ist;
- dass das Sprossenbasisprofil (110; 210; 310) und das Folienspannprofil (120; 220; 320) durch einen an wenigstens eines der Profile angeformten Stützsteg (124; 224, 315) aneinander abgestützt sind.

2. Sprossenprofileinheit (100; 200; 300) nach Anspruch 1, **dadurch gekennzeichnet, dass** der Stützsteg (124; 224, 315) zwei parallele Teilstege umfasst, die zwischen sich einen Schraubkanal (125; 225; 316) ausbilden.

3. Sprossenprofileinheit (100; 200) nach Anspruch 2, **dadurch gekennzeichnet, dass** der Stützsteg (124; 224) am Folienspannprofil (120, 220) angeformt ist.

4. Sprossenprofileinheit (100; 200) nach einem der Ansprüche 2 oder 3, **dadurch gekennzeichnet, dass** der Stützsteg (124; 224) zwischen Führungsstegen (115; 215) am Grund des Basisabschnitts (111; 211) gehalten ist.

5. Sprossenprofileinheit (100; 200; 300) nach einem der vorhergehenden Ansprüche, **dadurch gekennzeichnet, dass** die Seitenschenkel (112; 212; 312) wenigstens teilweise von dem Basisabschnitt (111; 211; 311) aus schräg nach außen weisend ausgerichtet sind oder eine wenigstens einen schräg nach außen weisenden Abschnitt der Innenflanken aufweisen.

6. Sprossenprofileinheit (300) nach einem der vorhergehenden Ansprüche, **dadurch gekennzeichnet, dass** die Außenkanten (122) des Folienspannprofils (120) an ihrer Unterseite, im Kontaktbereich zu den Kanten der Seitenschenkel (112), konkav ausgebildet sind.

7. Sprossenprofileinheit (100; 300) nach einem der vorhergehenden Ansprüche, **dadurch gekennzeichnet, dass** das Folienspannprofil (120; 320) zwei spiegelbildlich zueinander angeordnete, bogenförmige Kederaufnahmen (121; 321) aufweist.

8. Sprossenprofileinheit (100) nach Anspruch 7, **dadurch gekennzeichnet, dass** für beide Kederaufnahmen (121) ein gemeinsamer Aufnahmeraum (114) im Sprossenbasisprofil (110) ausgebildet ist, in dessen Mitte ein an das Folienspannprofil (120) angeformter Stützsteg (123) eingreift.

9. Sprossenprofileinheit (300) nach Anspruch 7, **dadurch gekennzeichnet, dass** der Stützsteg (324) am Sprossenbasisprofil (310) angeformt ist, wobei jeweils zwischen einem Seitenschenkel (312) und dem Stützsteg (324) ein Aufnahmeraum (314) für eine Kederaufnahme (321) ausgebildet ist.

10. Sprossenprofileinheit nach einem der vorhergehenden Ansprüche, **dadurch gekennzeichnet, dass** es zwei Folienspannprofile (120; 220; 320) und ein Doppel-Sprossenbasisprofil umfasst, welches aus zwei mit den Rückseiten der Basisabschnitte (111, 211, 311) miteinander verbundenen Sprossenbasisprofilen (110; 210; 310) besteht.

11. Sprossenprofileinheit nach Anspruch 10, **dadurch gekennzeichnet, dass** das Doppel-Sprossenbasisprofil einstückig ausgebildet ist.

12. Sprossenprofileinheit nach Anspruch 10 oder 11, **dadurch gekennzeichnet, dass** das Doppel-Sprossenbasisprofil aus zwei Sprossenbasisprofilen (110; 210; 310) gebildet ist, die rückenseitig über wenigstens ein wärmeisolierendes Element miteinander verbunden sind.

13. Gewächshaus mit einem teilweise transparenten Dach, das wenigstens zwei parallele Sprossen aufweist, die sich zwischen einer Fußpfette und/oder eine Traufe und einem First erstrecken, wobei die Sprossen jeweils durch eine Sprossenprofileinheit (110; 210; 310) nach einem der vorhergehenden Ansprüche gebildet oder dadurch verstärkt sind, und wobei zwischen benachbarten Sprossenprofileinheiten (110; 210; 310) jeweils wenigstens eine Folienbahn (30) gespannt ist, die randseitig jeweils durch ein in eine Folienfalte eingelegtes oder mit einem Folienrand verbundenes Kederprofil (31) festgelegt ist, welches in den Kederaufnahmen (121; 221; 321) aufgenommen ist.

14. Gewächshaus nach Anspruch 13, **dadurch gekennzeichnet, dass** das Kederprofil (31) fest mit einem Randbereich der Folienbahn (30) verbunden ist.

15. Gewächshaus nach Anspruch 13, **dadurch gekennzeichnet, dass** das Kederprofil (31) in eine Folienfalte der Folienbahn (30) eingelegt ist.
